# EUROPÄISCHE PATENTSCHRIFT

(11) **EP 2 907 368 B1**
(45) Veröffentlichungstag und Bekanntmachung des Hinweises auf die Patenterteilung: **21.06.2017**
(21) Anmeldenummer: 15401010.2
(22) Anmeldetag: 17.02.2015
(51) Int. Cl.: A01B 63/112, A01B 63/14

(54) **AUTOMATISCHE TRAKTIONSVERSTÄRKUNG**
AUTOMATIC TRACTION REINFORCEMENT
RENFORCEMENT AUTOMATIQUE DE LA TRACTION

(30) Priorität: 18.02.2014 DE 102014102028
(43) Veröffentlichungstag der Anmeldung: 19.08.2015
(73) Patentinhaber: Amazonen-Werke H. Dreyer GmbH & Co. KG, 49205 Hasbergen (DE)
(72) Erfinder: Meyer zu Hoberge, Jörg, 49492 Westerkappeln (DE); Kühn, Christoph, 49824 Ringe (DE)

(56) Entgegenhaltungen:
- EP-A2- 0 241 747
- EP-B1- 2 033 503
- WO-A1-2013/013917
- GB-A- 1 086 662

## Beschreibung

Die Erfindung betrifft ein System und ein Verfahren zur automatischen Kontrolle einer Traktionsverstärkung für einen Schlepper, der ein Anhängefahrzeug, beispielsweise eine Feldspritze zieht.

Bei landwirtschaftlichen Nutzfahrzeugen ist es bekannt, dass bei einer Kombination aus einer Zugmaschine, Traktor/Schlepper und ihrer nachgezogenen Arbeitsmaschine/Anhängefahrzeug zu verminderter Traktion der angetriebenen Achse oder der angetriebenen Achsen der Zugmaschine kommen kann, was sich als Antriebsschlupf oder kurz "Schlupf" äußern kann. Hierdurch kann eine Abweichung von der gewünschten Fahrgeschwindigkeit des Systems aus Traktor und Anhängefahrzeug resultieren, die für die landwirtschaftliche Anwendung, beispielsweise das Besprühen einer Nutzfläche, unerwünscht ist.

Für einen Traktor mit angelenktem Pflug ist es aus der DE 36 12 764 A1 bekannt, eine elektrohydraulische Hubwerksregelung vorzusehen. Dabei werden der Schlupf wenigstens einen Achse und die vertikale Komponente der Hubkraft als ein Paar sich beeinflussender Regelgrößen betrachtet. Dabei wird bei zu hohem Schlupf die vertikale Komponente der Hubkraft erhöht.

Die EP 2 033 503 B1 offenbart ein System aus einem Schlepper und einem Aufsattelpflug mit Mehrpunktanlenkung. Zur Erhöhung der Traktion am Schlepper werden Erfassungsmittel zum Ermitteln des Radschlupfes offenbart. Wird der Radschlupf zu groß, erfolgt eine Gewichtsübertragung vom Aufsattelpflug auf den Schlepper zur Erhöhung der Traktion.

Im Stand der Technik wird der Schlupf des Schleppers vom Schlepper detektiert. Anschließend muss entweder der Landwirt selbständig die Größe und Auswirkung des Schlupfes erkennen und manuell die traktionsverstärkenden Maßnahmen einleiten, oder aber der Schlepper erkennt den Schlupf und der Schlepper leitet durch Anpassung von Schleppereinstellungen traktionsverstärkende Maßnahmen ein.

Die Einstellung und Einleitung von traktionsverstärkenden Maßnahmen durch den Landwirt kann aber ungenau und fehlerbehaftet sein. Die Einstellung durch den Schlepper selbst erfordert eine am Schlepper installierte Steuerungsmöglichkeit.

Angesichts des Stands der Technik ist es Aufgabe der vorliegenden Erfindung, eine Alternative bereitzustellen, die unabhängig vom Landwirt traktionsverstärkenden Maßnahmen für die ein oder mehreren Antriebsachsen des Schleppers einleitet, so dass die Traktion der Antriebsachsen angepasst werden kann.

Diese Aufgabe wird durch ein System und ein Verfahren zur automatischen Kontrolle einer Traktionsverstärkung für einen Schlepper, der ein Anhängefahrzeug, beispielsweise eine Feldspritze zieht, gemäß Anspruch 1 gelöst, sowie durch ein entsprechendes Verfahren gemäß Anspruch 11.

Die Erfindung stellt ein System zur automatischen Kontrolle einer Traktionsverstärkung für einen Schlepper, der ein Anhängefahrzeug, insbesondere eine Feldspritze zieht, bereit, das System umfassend: eine am Anhängefahrzeug vorgesehene Steuereinheit; Mittel zum Bestimmen der Antriebsgeschwindigkeit von ein oder mehreren Antriebsrädern des Schleppers und zum Übermitteln der Antriebsgeschwindigkeit an die Steuereinheit; Mittel zum Bestimmen der Fahrgeschwindigkeit und zum Übermitteln der Fahrgeschwindigkeit an die Steuereinheit; wobei die Steuereinheit ausgebildet ist, die übermittelte Antriebsgeschwindigkeit und die übermittelt Fahrgeschwindigkeit zu vergleichen und auf der Basis des Vergleichs traktionsverstärkenden Maßnahmen einzuleiten, falls die Differenz zwischen der Antriebsgeschwindigkeit und der Fahrgeschwindigkeit einen vordefinierten Schwellenwert überschreitet.

Für ein Anhängefahrzeug, insbesondere für eine Feldspritze, können durch die an der Feldspritze vorgesehene Steuereinheit die Entscheidungen zur Traktionskontrolle, insbesondere zur Traktionsverstärkung für den Schlepper vorgenommen werden. Das kann automatisch geschehen und ist damit unabhängig sowohl vom Nutzer/Landwirt als auch von der Art des Schleppers/Traktor, der ein konventioneller Traktor sein kann. Die Überwachung des Schleppers durch die Feldspritze ist dadurch möglich. Als Antriebsgeschwindigkeit soll die resultierende Geschwindigkeit der angetriebenen Räder verstanden sein, also insbesondere die Radumfangsgeschwindigkeit, die durch die Antriebskraft auf die angetriebenen Räder entsteht. Diese Antriebsgeschwindigkeit kann von einer theoretisch berechneten Antriebsgeschwindigkeit für angetriebene Räder ohne jeglichen Schlupf abweichen.

In dem System können die Mittel zum Bestimmen der Antriebsgeschwindigkeit am Anhängefahrzeug und/oder am Schlepper vorgesehen sein.

In dem System können die Mittel zum Bestimmen der Fahrgeschwindigkeit am Anhängefahrzeug und/oder am Schlepper vorgesehen sein.

Durch Mittel zur Bestimmung der Antriebsgeschwindigkeit sowie Mittel zur Bestimmung der Fahrgeschwindigkeit, die am Anhängefahrzeuge, etwa der Feldspritze, vorgesehen sind, ist eine Unabhängigkeit vom Schlepper gegeben. Zusätzlich oder alternativ können am Schlepper vorhandene Mittel verwendet werden. Hierdurch ergeben sich vielfältige Möglichkeiten zur Bestimmung der Antriebsgeschwindigkeit und der Fahrgeschwindigkeit.

In dem System können die Mittel zur Erfassung der Fahrgeschwindigkeit einen Radarsensor und/oder einen Ultraschallsensor und/oder einen GPS-Sensor umfassen.

Mittels eines Radarsensors und/oder eines Ultraschallsensors und oder eines GPS-Sensors können die tatsächlichen Fahrgeschwindigkeiten ermittelt werden. Dies kann mit Hilfe dieser Sensoren ohne Bodenkontakt dieser Sensoren, also berührungslos geschehen.

In dem System können die Mittel zum Bestimmen der Antriebsgeschwindigkeit Sensoren zur Bestimmung der Radumfangsgeschwindigkeit der ein oder mehreren Antriebsräder des Schleppers umfassen und optional Sensoren zur Bestimmung der auf die ein oder mehreren Antriebsräder des Schleppers wirkende Last.

In dem System kann die Steuereinheit ausgebildet sein, als traktionsverstärkende Maßnahmen eine Stützlast auf den Schlepper und/oder eine Arbeitstiefe des Anhängefahrzeugs zu verändern.

In dem System kann die Steuereinheit ausgebildet sein, als traktionsverstärkende Maßnahmen die Stützlast und/oder die Arbeitstiefe des Anhängefahrzeugs mittels Tractor Implement Management, TIM, über Einstellungen am Schlepper zu verändern.

Durch eine Differenzbildung zwischen der Radumfangsgeschwindigkeit und der Fahrgeschwindigkeit kann der Schlupf für ein oder mehrere Antriebsräder berechnet werden. Ferner kann optional auf die Antriebsräder wirkende Last bestimmt werden. Das Anhängefahrzeug kann typischerweise über eine Deichsel mit einer Kupplung am Schlepper angekuppelt. Durch Veränderung der Last auf die Deichsel kann die Last auf die Antriebsräder verändert werden. Beispielsweise kann, falls ein erhöhter Schlupf der Antriebsräder registriert wird, die Last auf die Antriebsräder erhöht werden, indem das Anhängefahrzeug Druck auf die Deichsel ausübt.

In dem System kann die Steuereinheit ausgebildet sein, auf der Basis des bestimmten Schlupfes eine geänderte Arbeitsintensität für das Anhängefahrzeug zu bestimmen, derart dass der Bedarf an Zugkraft reduziert wird.

Für bestimmte Anwendungen kann es notwendig sein, die Arbeitsintensität für das Anhängefahrzeug anzupassen, so dass der Bedarf an Zugkraft sinkt.

In dem System können die Mittel zum Bestimmen der Antriebsgeschwindigkeit sowie die Mittel zum Bestimmen der Fahrgeschwindigkeit und die Steuereinheit über ISOBUS kommunizieren.

Ferner wird ein landwirtschaftliches Nutzfahrzeug mit Anhängefahrzeug, umfassend ein System wie oben beschrieben, bereitgestellt.

Außerdem stellt die Erfindung ein Verfahren zur automatischen Kontrolle einer Traktionsverstärkung für einen Schlepper, der ein Anhängefahrzeug, beispielsweise eine Feldspritze zieht, mit einer am Anhängefahrzeug vorgesehene Steuereinheit, umfassend; Bestimmen der Antriebsgeschwindigkeit von ein oder mehreren Antriebsrädern des Schleppers; Bestimmen der Fahrgeschwindigkeit; Vergleichen der Antriebsgeschwindigkeit und der Fahrgeschwindigkeit und Einleiten von traktionsverstärkenden Maßnahmen auf der Basis des Vergleichs, falls die Differenz zwischen der Antriebsgeschwindigkeit und der Fahrgeschwindigkeit einen vordefinierten Schwellenwert überschreitet.

Die Vorteile des Verfahrens sind bereits in dem Zusammenhang mit dem entsprechenden System beschrieben.

In dem Verfahren kann die Fahrgeschwindigkeit mittels eines Radarsensor und/oder eines Ultraschallsensors und/oder einen GPS-Sensors bestimmt werden, die am Schlepper und/oder am Anhängefahrzeug vorgesehen sein können.

In dem Verfahren kann die Antriebsgeschwindigkeit mittels Sensoren zur Bestimmung der Radumfangsgeschwindigkeit von ein oder mehreren Antriebsrädern des Schleppers bestimmt werden, und optional kann die Antriebsgeschwindigkeit mittels Sensoren zur Bestimmung der auf die ein oder mehreren Antriebsräder des Schleppers wirkende Last bestimmt werden.

In dem Verfahren können die traktionsverstärkende Maßnahmen eine Stützlast auf den Schlepper und/oder eine Arbeitstiefe des Anhängefahrzeugs verändern; wobei insbesondere die Stützlast und/oder die Arbeitstiefe des Anhängefahrzeugs mittels Tractor Implement Management, TIM, über Einstellungen am Schlepper veränderbar sein kann.

Das Verfahren kann ferner umfassen: Bestimmen einer geänderte Arbeitsintensität für das Anhängefahrzeug auf der Basis des bestimmten Schlupfes, derart dass der Bedarf an Zugkraft reduzierbar ist.

Im Folgenden werden Ausführungsformen der Erfindung unter Bezugnahme auf die Figuren beschrieben. Die beschriebenen Ausführungsformen sind in jeder Hinsicht lediglich als illustrativ und nicht als einschränkend anzusehen und verschiedene Kombinationen der angeführten Merkmale sind in der Erfindung eingeschlossen.

Es zeigt:

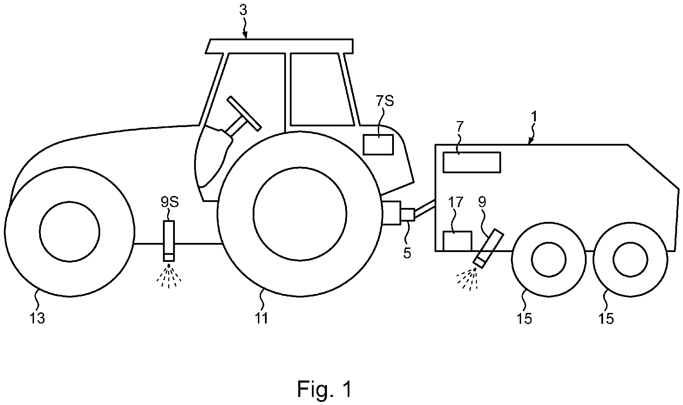

- Fig. 1:: Schematische Ansicht einer von einem Schlepper gezogenen Feldspritze mit automatischer Traktionskontrolle entsprechend der vorliegenden Erfindung.

Die Figur 1 zeigt ein Anhängefahrzeug, hier eine Feldspritze 1, die von einem Schlepper 3 gezogen wird. Die Feldspritze 1 ist mit einer Deichsel 5 an den Schlepper 3 angekuppelt. Die Feldspritze hat Laufräder 15. In der Figur 1 sind die Laufräder 15 beispielhaft als Laufräder an einer Tandemachse ausgeführt, d.h. die Feldspritze 1 besitzt eine Tandemachse. Es ist aber ebenso möglich, im Rahmen der vorliegenden Erfindung ein Anhängefahrzeug wie etwa eine Feldspritze mit nur einer Achse oder mit mehr als zwei Achsen vorzusehen.

Der Schlepper 3 hat vordere Laufräder 13 und hintere Laufräder 11. In dem gezeigten Beispiel sind die hinteren Laufräder 11 an einer Antriebsachse (nicht gezeigt) vorgesehen). Es versteht sich, dass wenigstens die hinteren Laufräder 11 angetrieben werden. Jedoch ist es ebenso möglich, insbesondere bei größeren Schleppern, dass mehrere Achsen angetrieben werden können.

An der Feldspritze 1 sind Mittel 9 zum berührungslosen Bestimmen der Fahrgeschwindigkeit vorgesehen. Dabei handelt es sich um die Fahrgeschwindigkeit der Feldspritze 1 und damit auch die Fahrgeschwindigkeit der Kombination aus Schlepper 3 und Feldspritze 1. Die Mittel 9 können als Radarsensor und/oder Ultraschallsensor und/oder GPS-Sensor ausgebildet sein. Mit einem Radarsensor oder Ultraschallsensor oder GPS-Sensor kann die tatsächliche Fahrgeschwindigkeit ohne Bodenkontakt bestimmt werden. Die somit bestimmte Geschwindigkeit kann als Referenzgeschwindigkeit für den Einsatz der Feldspritze 1 angesehen werden.

Am Schlepper 3 können optional oder alternativ weitere Mittel 9S zum berührungslosen Bestimmen der Fahrgeschwindigkeit vorgesehen sein. Diese können von der gleichen Art sein wie die Mittel 9. Es ist aber ebenso möglich, beispielsweise am Schlepper 3 als Mittel 9S einen Radarsensor vorzusehen und an der Feldspritze 1 einen GPS-Sensor oder einen Ultraschallsensor vorzusehen oder aber am Schlepper 3 einen GPS-Sensor und an der Feldspritze 1 einen Radarsensor.

An der Feldspritze 1 ist eine Steuereinheit 7 vorgesehen. Die Steuereinheit 7 ist zur Verarbeitung von Signalen und zur Steuerung und Kontrolle ausgebildet, wie nachfolgend beschrieben.

Am Schlepper 3 können, beispielsweise unmittelbar an den angetriebenen Rädern 11 oder an der zu den angetriebenen Rädern gehörigen Antriebsachse (nicht gezeigt) Mittel zum Bestimmen der Antriebsgeschwindigkeit von ein oder mehreren Antriebsrädern des Schleppers vorgesehen sein. Diese Mittel können weiterhin zum Übermitteln der Antriebsgeschwindigkeit der angetriebenen Räder an die Steuereinheit ausgebildet sein. Das Übermitteln der Antriebsgeschwindigkeiten der angetriebenen Räder kann optional mittels einer Steuereinheit 7S erfolgen, die am Schlepper vorgesehen ist. Die Steuereinheit 7S kann als "slave" und die Steuereinheit 7 als "master" vorgesehen sein. Die Steuereinheit 7S kann die Geschwindigkeitsdaten des Schleppers 3, insbesondere die Antriebsgeschwindigkeit des Schleppers der Steuereinheit 7 bereitstellen. Zum Bestimmen der Antriebsgeschwindigkeit des Schleppers können unmittelbar an den Antriebsrädern 11 des Schleppers 3 oder an oder in seiner angetriebenen Achse Sensoren zur Bestimmung der Radumfangsgeschwindigkeit vorhanden sein. Ferner können Sensoren zur Bestimmung der auf die ein oder mehreren Antriebsräder des Schleppers wirkende Last vorgesehen sein. Die Steuereinheit 7S kann die Daten für den Schlepper 3 sammeln und entweder periodisch an die Steuereinheit 7 übermitteln oder aber auf Abfrage durch die Steuereinheit 7 an die Steuereinheit 7 senden.

Es ist aber ebenso möglich, einen Schlepper 1 zu verwenden, an dem keine Steuereinheit 7S vorgesehen ist. Zusätzlich oder in diesem Falle alternativ können an der Feldspritze Sensoren 17 vorgesehen sein, die die Antriebsgeschwindigkeit der Antriebsräder 11 des Schleppers 3, insbesondere der Radumlaufgeschwindigkeit der Antriebsräder 11, überwachen und ermitteln können. Dabei kann es sich beispielsweise um optische Sensoren handeln.

Die Kommunikation der Geschwindigkeitsdaten für die Antriebsgeschwindigkeit der angetriebenen Räder des Schleppers 3 und der Fahrgeschwindigkeit der Feldspritze 1, also der Kombination aus Schlepper 3 und Feldspritze 1, an die Steuereinheit 7 kann über ein ISOBUS-System erfolgen.

Die Steuereinheit 7 kann auf der Basis der erhaltenen Daten feststellen, ob eine relevante Abweichung zwischen der Fahrgeschwindigkeit der Feldspritze 1 und der Antriebsgeschwindigkeit der angetriebenen Räder 11 des Schleppers 3 bestimmt. Eine Abweichung kann dann als relevant betrachtet werden, wenn beispielsweise die Differenz zwischen Radumlaufgeschwindigkeit der angetriebenen Räder und Fahrgeschwindigkeit größer als ein vorgegebener Schwellenwert ist. Es versteht sich, dass dieser Schwellenwert programmierbar sein kann. Wird der Schwellenwert überschritten, kann die Steuereinheit 7 von einem Schlupf, also einem Verlust an Traktion der Antriebsräder ausgehen. Die Steuereinheit 7 kann ausgebildet ist, als traktionsverstärkende Maßnahmen eine Stützlast auf den Schlepper 3 und/oder eine Arbeitstiefe des Anhängefahrzeugs, in diesem Beispiel der Feldspritze 1, zu verändern. Dabei kann beispielsweise ein Hubsystem auf der Feldspitze 1 die vertikal auf die Achse oder Achsen der Feldspritze 1 wirkende Last so verändern, dass die Last auf die Deichsel 5 und damit auf die angetriebenen Räder 11 des Schleppers 3 verändert wird. Insbesondere kann die Steuereinheit 7 als traktionsverstärkende Maßnahmen die Stützlast und/oder die Arbeitstiefe der Feldspritze 1 mittels Tractor Implement Management, TIM, über Einstellungen am Schlepper 3 verändern. Es versteht sich natürlich, dass die Steuereinheit 7 diese Veränderungen registriert und gegebenenfalls bei verbesserten Bodenbedingungen rückgängig machen kann, wenn eine weniger große Last auf die Antriebsachsen des Schleppers 3 erforderlich sein kann. Dabei kann die Steuereinheit 7 Karten, insbesondere elektronische Karten und GPS-Daten für den Ort und die Bodenbeschaffenheit heranziehen. Gegebenenfalls kann die Steuereinheit 7 ebenso ausgebildet sein, auf der Basis des bestimmten Schlupfes eine geänderte Arbeitsintensität für die Feldspritze 1 zu bestimmen, derart dass der Bedarf an Zugkraft reduziert wird.

## Patentansprüche

1. System zur automatischen Kontrolle einer Traktionsverstärkung für einen Schlepper (3), der ein Anhängefahrzeug (1), insbesondere eine Feldspritze zieht, umfassend:
eine am Anhängefahrzeug (1) vorgesehene Steuereinheit (7);
Mittel (17) zum Bestimmen der Antriebsgeschwindigkeit von ein oder mehreren Antriebsrädern (11) des Schleppers (3) und zum Übermitteln der Antriebsgeschwindigkeit an die Steuereinheit (7);
Mittel (9, 9S) zum Bestimmen der Fahrgeschwindigkeit und zum Übermitteln der Fahrgeschwindigkeit an die Steuereinheit (7);
**dadurch gekennzeichnet, dass**
die Steuereinheit (7) konfiguriert ist, die übermittelte Antriebsgeschwindigkeit und die übermittelt Fahrgeschwindigkeit zu vergleichen und konfiguriert ist, auf der Basis des Vergleichs traktionsverstärkenden Maßnahmen einzuleiten, falls die Differenz zwischen der Antriebsgeschwindigkeit und der Fahrgeschwindigkeit einen vordefinierten Schwellenwert überschreitet;
und dass die Mittel (17) zum Bestimmen der Antriebsgeschwindigkeit am Anhängefahrzeug (1) vorgesehen sind.

2. System gemäß Anspruch 1, wobei die Mittel (17) zum Bestimmen der Antriebsgeschwindigkeit auch am Schlepper (3) vorgesehen sind.

3. System gemäß Anspruch 1 oder 2, wobei die Mittel (9, 9S) zum Bestimmen der Fahrgeschwindigkeit am Anhängefahrzeug (1) und/oder am Schlepper (3) vorgesehen sind.

4. System gemäß wenigstens einem der Ansprüche 1 - 3, wobei die Mittel (9, 9S) zur Erfassung der Fahrgeschwindigkeit einen Radarsensor und/oder einen Ultraschallsensor und/oder einen GPS-Sensor umfassen.

5. System gemäß wenigstens einem der Ansprüche 1 - 4, wobei die Mittel (17) zum Bestimmen der Antriebsgeschwindigkeit Sensoren zur Bestimmung der Radumfangsgeschwindigkeit der ein oder mehreren Antriebsräder des Schleppers (3) umfassen und optional Sensoren zur Bestimmung der auf die ein oder mehreren Antriebsräder des Schleppers (3) wirkende Last.

6. System gemäß wenigstens einem der Ansprüche 1 - 5, wobei die Steuereinheit (7) ausgebildet ist, als traktionsverstärkende Maßnahmen eine Stützlast auf den Schlepper (3) und/oder eine Arbeitstiefe des Anhängefahrzeugs (1) zu verändern.

7. System gemäß wenigstens einem der Ansprüche 1 - 6, wobei die Steuereinheit (7) ausgebildet ist, als traktionsverstärkende Maßnahmen die Stützlast und/oder die Arbeitstiefe des Anhängefahrzeugs (1) mittels Tractor Implement Management, TIM, über Einstellungen am Schlepper (3) zu verändern.

8. System gemäß wenigstens einem der Ansprüche 1 - 7, wobei die Steuereinheit (7) ausgebildet ist, auf der Basis des bestimmten Schlupfes eine geänderte Arbeitsintensität für das Anhängefahrzeug (1) zu bestimmen, derart dass der Bedarf an Zugkraft reduziert wird.

9. System gemäß wenigstens einem der Ansprüche 1 - 8, wobei die Mittel (17) zum Bestimmen der Antriebsgeschwindigkeit sowie die Mittel (9, 9S) zum Bestimmen der Fahrgeschwindigkeit und die Steuereinheit (7) über ISOBUS kommunizieren.

10. Landwirtschaftliches Nutzfahrzeug mit Anhängefahrzeug, umfassend ein System gemäß wenigstens einem der Ansprüche 1 - 9.

11. Verfahren zur automatischen Kontrolle einer Traktionsverstärkung für einen Schlepper (3), der ein Anhängefahrzeug (1), beispielsweise eine Feldspritze zieht, mit einer am Anhängefahrzeug vorgesehene Steuereinheit (7), umfassend;
Bestimmen der Antriebsgeschwindigkeit von ein oder mehreren Antriebsrädern (11) des Schleppers (3);
Bestimmen der Fahrgeschwindigkeit;
Vergleichen der Antriebsgeschwindigkeit und der Fahrgeschwindigkeit und Einleiten von traktionsverstärkenden Maßnahmen auf der Basis des Vergleichs, falls die Differenz zwischen der Antriebsgeschwindigkeit und der Fahrgeschwindigkeit einen vordefinierten Schwellenwert überschreitet.

12. Verfahren gemäß Anspruch 11, wobei die Fahrgeschwindigkeit mittels eines Radarsensor und/oder eines Ultraschallsensors und/oder einen GPS-Sensors bestimmt wird, die am Schlepper (3) und/oder am Anhängefahrzeug (1) vorgesehen sind.

13. Verfahren gemäß Anspruch 11 oder 12, wobei die Antriebsgeschwindigkeit mittels Sensoren zur Bestimmung der Radumfangsgeschwindigkeit von ein oder mehreren Antriebsräder des Schleppers (3) bestimmt wird, und optional die Antriebsgeschwindigkeit mittels Sensoren zur Bestimmung der auf die ein oder mehreren Antriebsräder des Schleppers (3) wirkende Last bestimmt wird.

14. Verfahren gemäß wenigstens einem der Ansprüche 11 - 13, wobei die traktionsverstärkende Maßnahmen eine Stützlast auf den Schlepper (3) und/oder eine Arbeitstiefe des Anhängefahrzeugs (1) verändern; wobei insbesondere die Stützlast und/oder die Arbeitstiefe des Anhängefahrzeugs (1) mittels Tractor Implement Management, TIM, über Einstellungen am Schlepper (3) veränderbar ist.

15. Verfahren gemäß wenigstens einem der Ansprüche 11 - 14, ferner umfassend:
Bestimmen einer geänderte Arbeitsintensität für das Anhängefahrzeug (1) auf der Basis des bestimmten Schlupfes, derart dass der Bedarf an Zugkraft reduzierbar ist.

## Claims

1. System for automatically controlling an increase in the traction for a tractor (3) which pulls a trailer vehicle (1), in particular a field sprayer, comprising:
a control unit (7) which is provided on the trailer vehicle (1);
means (17) for determining the drive speed of one or more driven wheels (11) of the tractor (3) and for transferring the drive speed to the control unit (7);
means (9, 9S) for determining the velocity and for transferring the velocity to the control unit (7);
**characterized in that**
the control unit (7) is configured to compare the transferred drive speed and the transferred velocity and is configured to initiate traction-increasing measures on the basis of the comparison if the difference between the drive speed and the velocity exceeds a predefined threshold value;
and **in that** the means (17) are provided for determining the drive speed at the trailer vehicle (1).

2. System according to Claim 1, wherein the means (17) are provided for determining the drive speed also at the tractor (3).

3. System according to Claim 1 or 2, wherein the means (9, 9S) for determining the velocity are provided at the trailer vehicle (1) and/or at the tractor (3).

4. System according to at least one of Claims 1-3, wherein the means (9, 9S) for detecting the velocity comprise a radar sensor and/or an ultrasound sensor and/or a GPS sensor.

5. System according to at least one of Claims 1-4, wherein the means (17) for determining the drive speed comprise sensors for determining the wheel circumferential speed of the one or more driven wheels of the tractor (3) and optionally sensors for determining the load acting on the one or more driven wheels of the tractor (3).

6. System according to at least one of Claims 1-5, wherein the control unit (7) is designed to change, as traction-increasing measures, a support load on the tractor (3) and/or a working depth of the trailer vehicle (1).

7. System according to at least one of Claims 1-6, wherein the control unit (7) is designed to change, as traction-increasing measures, the support load and/or the working depth of the trailer vehicle (1) by means of tractor implement management, TIM, using settings at the tractor (3).

8. System according to at least one of Claims 1-7, wherein the control unit (7) is designed to determine a changed working intensity for the trailer vehicle (1) on the basis of the determined slip in such a way that the demand for tractive force is reduced.

9. System according to at least one of Claims 1-8, wherein the means (17) for determining the drive speed and the means (9, 9S) for determining the velocity and the control unit (7) communicate via ISOBUS.

10. Agricultural utility vehicle having a trailer vehicle, comprising a system according to at least one of Claims 1-9.

11. Method for automatically controlling an increase in traction for a tractor (3) which pulls a trailer vehicle (1), for example a field sprayer, having a control unit (7) which is provided at the trailer vehicle, comprising:
determining the drive speed of one or more driven wheels (11) of the tractor (3);
determining the velocity;
comparing the drive speed and the velocity and initiating traction-increasing measures on the basis of the comparison if the difference between the drive speed and the velocity exceeds a predetermined threshold value.

12. Method according to Claim 11, wherein the velocity is determined by means of a radar sensor and/or an ultrasound sensor and/or a GPS sensor which are provided at the tractor (3) and/or at the trailer vehicle (1).

13. Method according to Claim 11 or 12, wherein the drive speed is determined by means of sensors for determining the wheel circumferential speed of one or more driven wheels of the tractor (3) and optionally the drive speed is determined by means of sensors for determining the load acting on the one or more driven wheels of the tractor (3).

14. Method according to at least one of Claims 11-13, wherein the traction-increasing measures change a support load on the tractor (3) and/or a working depth of the trailer vehicle (1); wherein, in particular, the support load and/or the working depth of the trailer vehicle (1) can be changed by means of tractor implement management, TIM, using settings at the tractor (3).

15. Method according to at least one of Claims 11-14, also comprising:
determining a changed working intensity for the trailer vehicle (1) on the basis of the determined slip in such a way that the demand of tractive force can be reduced.

## Revendications

1. Système de commande automatique d'un renforcement de traction destiné à un tracteur (3) qui tire un véhicule tracté (1), notamment un pulvérisateur agricole, comprenant :
une unité de commande (7) prévue sur le véhicule tracté (1) ;
des moyens (17) destinés à déterminer la vitesse d'entraînement d'une ou plusieurs roues motrices (11) du tracteur (3) et à transmettre la vitesse d'entraînement à l'unité de commande (7) ;
des moyens (9, 9S) destinés à déterminer la vitesse de déplacement et à transmettre la vitesse de déplacement à l'unité de commande (7) ;
**caractérisé en ce que** l'unité de commande (7) est configurée pour comparer la vitesse d'entraînement transmise et la vitesse de déplacement transmise et est configurée pour mettre en oeuvre, sur la base de la comparaison, les mesures de renforcement de la traction dans le cas où la différence entre la vitesse d'entraînement et la vitesse de déplacement dépasse une valeur de seuil prédéfinie ;
et **en ce que** les moyens (17) destinés à déterminer la vitesse d'entraînement sont prévus sur le véhicule remorqué (1).

2. Système selon la revendication 1, dans lequel les moyens (17) destinés à déterminer la vitesse d'entraînement sont également prévus sur le tracteur (3).

3. Système selon la revendication 1 ou 2, dans lequel les moyens (9, 9S) destinés à déterminer la vitesse de déplacement sont prévus sur le véhicule tracté (1) et/ou sur le tracteur (3).

4. Système selon au moins l'une des revendications 1 à 3, dans lequel les moyens (9, 9S) destinés à détecter la vitesse de déplacement comprennent un capteur radar et/ou un capteur à ultrasons et/ou un capteur GPS.

5. Système selon au moins l'une des revendications 1 à 4, dans lequel les moyens (17) destinés à déterminer la vitesse d'entraînement comprennent des capteurs destinés à déterminer la vitesse circonférentielle de roue desdites une ou plusieurs roues motrices du tracteur (3) et des capteurs facultatifs destinés à déterminer la charge agissant sur lesdites une ou plusieurs roues motrices du tracteur (3).

6. Système selon au moins l'une des revendications 1 à 5, dans lequel l'unité de commande (7) est conçue pour modifier, en tant que mesures de renforcement de la traction, une charge d'appui sur le tracteur (3) et/ou une profondeur de travail du véhicule tracté (1).

7. Système selon au moins l'une des revendications 1 à 6, dans lequel l'unité de commande (7) est conçue pour modifier, en tant que mesures de renforcement de la traction, la charge d'appui et/ou la profondeur de travail du véhicule tracté (1) au moyen d'un système, TIM (Tractor Implement Management) par l'intermédiaire de configurations effectuées sur le tracteur (3).

8. Système selon au moins l'une des revendications 1 à 7, dans lequel l'unité de commande (7) est conçue pour déterminer, sur la base du patinage déterminé, une intensité de travail modifiée pour le véhicule tracté (1) de manière à réduire le besoin de force de traction.

9. Système selon au moins l'une des revendications 1 à 8, dans lequel les moyens (17) destinés à déterminer la vitesse d'entraînement ainsi que les moyens (9, 9S) destinés à déterminer la vitesse de déplacement et l'unité de commande (7) communiquent par l'intermédiaire d'un bus ISOBUS.

10. Véhicule utilitaire agricole comportant un véhicule tracté, comprenant un système selon au moins l'une des revendications 1 à 9.

11. Procédé de commande automatique d'un renforcement de traction destiné à un tracteur (3) qui tire un véhicule tracté (1), notamment un pulvérisateur agricole, comportant : une unité de commande (7) prévue sur le véhicule tracté, consistant à :
déterminer la vitesse d'entraînement d'une ou plusieurs roues motrices (11) du tracteur (3) ;
déterminer la vitesse de déplacement ;
comparer la vitesse d'entraînement à la vitesse de déplacement et mettre en oeuvre des mesures de renforcement de la traction sur la base de la comparaison dans le cas où la différence entre la vitesse d'entraînement et la vitesse de déplacement dépasse une valeur de seuil prédéfinie.

12. Procédé selon la revendication 11, dans lequel la vitesse de déplacement est déterminée au moyen d'un capteur radar et/ou d'un capteur à ultrasons et/ou d'un capteur GPS qui sont prévus sur le tracteur (3) et/ou sur le véhicule tracté (1).

13. Procédé selon la revendication 11 ou 12, dans lequel la vitesse d'entraînement est déterminée au moyen de capteurs destinés à déterminer la vitesse circonférentielle de roue d'une ou plusieurs roues motrices du tracteur (3) et la vitesse d'entraînement est facultativement déterminée au moyen de capteurs destinés à déterminer la charge agissant sur lesdites une ou plusieurs roues motrices du tracteur (3).

14. Procédé selon au moins l'une des revendications 11 à 13, dans lequel les mesures de renforcement de la traction modifient une charge d'appui sur le tracteur (3) et/ou une profondeur de travail du véhicule tracté (1) ; dans lequel la charge d'appui et/ou la profondeur de travail du véhicule tracté (1) sont notamment modifiables au moyen d'un système TIM (Tractor Implement Management) par l'intermédiaire de configurations effectuées sur le tracteur (3).

15. Procédé selon au moins l'une des revendications 11 à 14, consistant en outre à :
déterminer une intensité de travail modifiée pour le véhicule tracté (1) sur la base du patinage déterminé de manière à réduire le besoin de force de traction.
